# EUROPÄISCHE PATENTSCHRIFT

(11) **EP 2 269 803 B1**
(45) Veröffentlichungstag und Bekanntmachung des Hinweises auf die Patenterteilung: **25.10.2017**
(21) Anmeldenummer: 10165822.7
(22) Anmeldetag: 14.06.2010
(51) Int. Cl.: B29C 49/36, B29C 49/42, B29C 49/62, B29C 49/78, B29C 31/00, B29C 33/04, B29C 33/36, B29C 35/16, B29C 49/12, B29C 49/48, B29C 49/66

(54) **Verfahren zum Umrüsten einer Blasmaschine und Blasmaschine**
Method of changeover of a blowing machine and blowing machine
Procédé de changement d'outillage d'une souffleuse et souffleuse

(30) Priorität: 30.06.2009 DE 102009031154
(43) Veröffentlichungstag der Anmeldung: 05.01.2011
(73) Patentinhaber: Krones AG, 93073 Neutraubling (DE)
(72) Erfinder: Hirdina, Jochen, 93057, Regensburg (DE)
(74) Vertreter: Grünecker Patent- und Rechtsanwälte PartG mbB

(56) Entgegenhaltungen:
- EP-A1- 2 050 557
- US-A- 5 411 698
- US-A1- 2003 085 491

## Beschreibung

Die Erfindung betrifft ein Verfahren gemäß Oberbegriff des Patentanspruchs 1 sowie eine Blasmaschine gemäß Oberbegriff des Patentanspruchs 10.

Eine Blasmaschine sowie ein Verfahren zum Umrüsten einer bei einem Arbeitszyklus umlaufend bewegbare auf eine Heatset-Betriebstemperatur aufgeheizte Formen aufweisenden Blasmaschine für Kunststoffbehälter aus Preforms, insbesondere PET-Flaschen, durch einen Formenwechsel, sind aus EP2050557 A1 bekannt.

In Heatset-Blasmaschinen, z. B. für PET-Flaschen für heiß abzufüllende Getränke, werden die Formen durch Temperiereinrichtungen mit einem Wärmeträger-Medium zusätzlich auf eine Heatset-Betriebstemperatur aufgeheizt. Zur Umrüstung der Heatset-Blasmaschine auf einen anderen Flaschentyp müssen die Formen getauscht werden. In einer Heatset-Blasmaschine sind beispielsweise mindestens acht Formen, oder bis zu dreißig Formen und mehr enthalten. Die Heatset-Betriebstemperatur kann etwa 130°C bis 180°C betragen, sodass bei einem Formenwechsel zunächst abgewartet werden muss, bis die Formen auf eine Handhabungstemperatur von z. B. 40° - 60°C abgekühlt sind. Die Formen werden zwar durch das weiterhin geförderte, nicht mehr beheizte Wärmeträger-Medium der Temperiereinrichtungen gekühlt, dennoch dauert es mindestens etwa eine halbe Stunde, bis die Formen auf etwa 60°C, und mehr als eine Stunde, bis die Formen auf etwa 40°C abgekühlt sind und gewechselt werden können. Ein Formenwechsel bedeutet deshalb einen hohen Produktionsverlust. Wird in der Heatset-Blasmaschine reckgeblasen, so wird in den Formhohlraum jeder Form eine Reckspülstange eingeführt, die während eines normalen Arbeitszyklus die Preform in der Form mechanisch vorreckt, und durch die Blasluft über einen begrenzten Abschnitt des normalen Arbeitszyklus zugeführt wird, um die vorgereckte Preform in die Flaschenform zu bringen. Gegebenenfalls wird vor dem Entformen der Flasche auch kurzzeitig Spülluft eingeblasen, um die Flasche formstabil entnehmen zu können. Grundsätzlich wird jedoch jede Form vorbereitend zu einem Wechsel nur durch den weiterhin zirkulierenden, nicht mehr aufgeheizten Wärmeträger von den Temperiereinrichtungen gekühlt.

Aus JP 3222714 A ist es bekannt, zum schnelleren Verfestigen eines Formkörpers in einer Form und zum Verkürzen der Zykluszeit mit Gas zunächst zu heizen und dann zu kühlen.

Aus JP 9085420 A ist es bekannt, beim Formvorgang eine Metallform mit Kühlwasser zu kühlen.

Aus US 6991756 B2 ist es bekannt, einer Metallform intern einen Wärmetauschapparat zuzuordnen, um entweder einen flüssigen heißen oder einen kalten Wärmeträger durch Wärmeaustauschpassagen der Form zu führen, und beim Übergang vom heißen auf den kalten Wärmeträger mit Spülluft den jeweiligen Wärmeträger auszuspülen.

Aus DE 4242024 C2 ist es schließlich bekannt, eine Form zur Kunststoffverarbeitung in vom Formhohlraum getrennten Kanälen mit einer Flüssigkeit auf Betriebstemperatur zu halten, um mit höherer Temperatur eingeführten plastifizierten Kunststoff zu verfestigen, und vor einem Formenwechsel in den Kanälen enthaltene Flüssigkeit mit Druckluft zu entfernen.

Der Erfindung liegt die Aufgabe zu Grunde, ein Verfahren der eingangs genannten Art sowie eine Blasmaschine anzugeben, bei denen durch eine Umrüstung mit Formenwechsel bedingter Produktionsausfall minimiert wird.

Die gestellte Aufgabe wird verfahrensgemäß mit den Merkmalen des Patentanspruchs 1, und bei der Blasmaschine mit den Merkmalen des Patentanspruchs 10 gelöst.

Grundgedanke ist es, die Blasmaschine nicht abzustellen und zu warten, bis die Formen ausreichend abgekühlt sind, sondern in wenigstens einem simulierten Arbeitszyklus durch Wärmeentzug von der Formhohlraumoberfläche mit einem extern zugeführten Kühlmedium zwangszukühlen.

Verfahrensgemäß wird jede Heat-Set-Form gegebenenfalls nicht nur durch den ohne weitere Wärmezufuhr durch die Form zirkulierenden Wärmeträger der Temperiereinrichtungen gekühlt, sondern zusätzlich während wenigstens eines simulierten Arbeitszyklus durch extern zugeführtes Kühlmedium, das der Form über die Formhohlraumoberfläche effizient Wärme entzieht und abführt. Überraschend lässt sich dadurch die Wartezeit, bis die Formen handhabungsgerechte Temperaturen haben, um etwa die Hälfte oder sogar mehr verkürzen, wodurch durch eine Umrüstung mit Formenwechsel bedingten Produktionsausfall minimiert wird. Dabei wird zumindest ein simulierter Arbeitszyklus mit leeren Formen durchgeführt, so dass alle Formen gleichmäßig und gleichzeitig abgekühlt werden, wobei gewinnbringend ohnedies vorhandenen Antriebs- und Bewegungssteuermechanismen der Blasmaschine benutzt werden können. Zusätzlich ist es nur erforderlich, das Kühlmedium in ausreichender Menge, gegebenenfalls mit die Kühlwirkung intensivierendem höherem Druck und entsprechender Förderrate bereitzustellen und einzuführen. Dieser Mehraufwand ist jedoch im Hinblick auf die erzielbare Minimierung des Produktionsausfalls vernachlässigbar. Die Wärmeabfuhr mittels des kühlenden Mediums von der Formhohlraumoberfläche ist überraschend effizient, wobei ohne nennenswerte Modifikationen an den Formen oder der weiteren Ausrüstung der Blasmaschine für die zusätzliche Kühlung ohnedies gegebene Strömungswege in den Formhohlraum benutzt werden können. Alternativ könnte das Kühlmedium auch in nur für die Zwangskühlung vorgesehenen Zuführ- und oder Abführwegen durch eine ebenfalls nur für diesen Zweck vorgesehene Fördereinrichtung zirkulieren. Verfahrensgemäß werden gegebenenfalls mehrere simulierte Arbeitszyklen hintereinander durchgeführt, wobei die Blasmaschine "leer" weiterläuft, bis die zum Formenwechsel gewünschte Formtemperatur erreicht ist.

Die Blasmaschine benötigt neben ohnedies vorhandenen Ausstattungen im Wesentlichen nur eine Programmroutine in der Maschinensteuerung, um vorbereitend zu einer Umrüstung mindestens einen simulierten Arbeitszyklus mit leeren Formen auszuführen und das Kühl-medium, gegebenenfalls gleichzeitig, in die Formhohlräume aller Formen zu fördern. Dabei wird, zweckmäßig, der zumindest eine simulierte Arbeitszyklus mit leeren Formen mit gegenüber den normalen Arbeitszyklen verringerter Umlaufgeschwindigkeit der Formen und dadurch verringertem Energieeinsatz gefahren. Die Blasmaschine, insbesondere eine Heat-set-Reckblasmaschine, benötigt darüber hinaus u. U. keine signifikanten Modifikationen. Die für das Heatset-Blasformen vorgesehenen Temperiereinrichtungen beheizen den zum Temperieren eingesetzten Wärmeträger bei dem simulierten Arbeitszyklus nicht, da sie nur für einen normalen Arbeitszyklus oder zum Aufheizen aktiviert sind, sodass dann die zusätzliche Kühlung durch das extern zugeführte Kühlmedium eine rasche Absenkung der Formentemperatur gegenüber der Heatset-Betriebstemperatur bewirkt, und die Formen bereits nach sehr kurzer Zeit gewechselt werden können. Beispielsweise wird zum Kühlen an der Formhohlraumoberfläche Umgebungsluft verwendet. Die Umgebungsluft kann gegebenenfalls aktiv gekühlt werden, um den Kühleffekt noch zu verstärken. Alternativ könnte auch ein flüssiges Kühlmedium wie Kühlwasser verwendet werden, oder eine Mischung aus gasförmigen und flüssigen Kühlmedien, z. B. in Aerosolform, um den Kühleffekt durch Entzug von Verdampfungswärme von der Formhohlraumoberfläche zu verstärken.

Bei einer zweckmäßigen Verfahrensvariante wird das Kühlmedium in einer als Reckblasmaschine ausgebildeten Blasmaschine durch die in der leeren Form platzierte Reckspülstange zugeführt, z. B. permanent und mit hohem Druck bzw. hoher Durchsatzrate, wobei alle so gekühlten Formen mit gegenüber einem normalen Arbeitszyklus verringerter Umlaufgeschwindigkeit bewegt werden. Das zugeführte Kühlmedium strömt beispielsweise durch einen bei leerer Form zwischen der Reckspülstange und der Form vorhandenen Zwischenraum aus dem Formhohlraum ab. Alternativ oder additiv könnte auch wenigstens ein Entlastungsventil der Form zugeordnet sein, das während des simulierten Arbeitszyklus entweder geöffnet wird, oder druckabhängig anspricht, und eine möglichst große Förderrate des Kühlmediums abströmen lässt, gegebenenfalls unter einem die Kühlwirkung verstärkenden Vorspanndruck. Es wäre auch denkbar, während des simulierten Arbeitszyklus die Form zumindest teilweise zu öffnen, um zusätzliche Abströmwege für das Kühlmedium frei zu machen. Gegebenenfalls wird das Kühlmedium gezielt gesteuert speziell mit hoher Durchsatzrate durch den Formhohlraum geführt, wenn während des simulierten Arbeitszyklus wie auch beim normalen Arbeitszyklus jede Form während der Umlaufbewegung geöffnet und wieder geschlossen wird. Dabei wird der Reckspülstange für den simulierten Arbeitszyklus eine Zusatzfunktion zugewiesen, indem sie das Kühlmedium in dem Formhohlraum verteilt und gegen die Formhohlraumoberfläche fördert. Bei einer zweckmäßigen Verfahrensvariante wird die Reckspülstange beim simulierten Arbeitszyklus im Formhohlraum in einer optimalen Kühlposition im Wesentlichen ortsfest gehalten, während das Kühlmedium gefördert wird, um eine optimale Kühlwirkung zu erzielen. Während des simulierten Arbeitszyklus wird somit die Reckspülstange nicht wie während des normalen Arbeitszyklus in der Form hin- und her bewegt.

Alternativ kann es bei einer anderen Verfahrensvariante hingegen zweckmäßig sein, die ohnedies beim normalen Arbeitszyklus zum Blasformen des Behälters gesteuerte Bewegung der Reckspülstange relativ zur Form zu nutzen, um das extern zugeführte Kühlmedium im Formhohlraum zu verteilen.

Bei einer zweckmäßigen Verfahrensvariante wird jeder simulierte Arbeitszyklus mit gegenüber einem normalen Arbeitszyklus langsamerer Bewegungsgeschwindigkeit der Formen durchgeführt. Die Umlaufgeschwindigkeit kann erheblich verringert sein, wodurch nur wenig Antriebsenergie verbraucht wird. Beispielsweise wird der simulierte Arbeitszyklus mit einer Umlaufgeschwindigkeit von etwa 50 Grad/s über 360 Grad durchgeführt.

Verfahrensgemäß kann es ferner von Vorteil sein, beim Abkühlen und während des simulierten Arbeitszyklus den Winkelbereich gegenüber einem normalen Arbeitszyklus zu variieren, z. B. zu spreizen, über den innerhalb des mit einer Drehbewegung der Formen um eine Maschinenachse simulierten Arbeitszyklus mit gleichzeitiger Kühlung aller Formen das Kühlmedium in jede Form gefördert wird. Beim normalen Arbeitszyklus wird beispielsweise Blasluft nur über einen sehr kleinen Winkelbereich und mit moderatem Durchsatz zugeführt, wohingegen während der simulierten Arbeitsphase Umgebungsluft permanent mit hohem Durchsatz und relativ lange bis maximal über einen vollständigen Umlauf zugeführt wird. Ferner kann beim Abkühlen der Förderdruck des Kühlmediums gegenüber einem normalen Arbeitszyklus variiert werden, z. B. deutlich erhöht werden. Beispielsweise kann der Förderdruck zwischen etwa 40 bar und 10 bar betragen oder in diesem Druckbereich variiert werden.

Die vorerwähnten Verfahrensvarianten können auch miteinander kombiniert werden, um die Kühlwirkung so effizient wie möglich zu gestalten.

Zum Kühlen kann das gleiche Medium verwendet werden, wie es beispielsweise auch zum Blasformen benutzt wird. Alternativ kann ein anderes Medium und sogar eine Flüssigkeit oder eine Gas/Flüssigkeitsmischung zum Kühlen verwendet werden. Wird während des simulierten Arbeitszyklus mit leeren Formen Umgebungsluft wie auch zum Blasformen verwendet, dann kann während des simulierten Arbeitszyklus die Umgebungsluft gekühlt werden, wie auch ein flüssiges oder aerosolförmiges Kühlmedium. Das Kühlmedium wird extern gefördert und zugeführt und kann ein Gas oder eine Flüssigkeit oder eine Gas/Flüssigkeitsmischung, z. B. ein Aerosol sein, um im letztgenannten Fall beispielsweise durch Entzug von Verdampfungswärme über die Formhohlraumoberfläche noch intensiver zu kühlen.

In der Blasmaschine, insbesondere in einer Heatset-Reckblasmaschine, wird die externe Zufuhr des Kühlmediums mit der in die Form einbringbaren Reckspülstange verbunden, die das geförderte Kühlmedium im Formhohlraum und auf der Formhohlraumoberfläche verteilt und durch den gegebenen Zwischenraum zwischen der Reckspülstange und der Form austreibt.

Alternativ kann die Blasmaschine wenigstens eine zusätzliche und mit der jeweiligen Form bzw. deren Reckspülstange zumindest während eines simulierten Arbeitszyklus verbindbare Fördereinrichtung für ein extern zugeführtes Kühlmedium aufweisen, das gasförmig, flüssig oder gasförmig und flüssig sein kann.

Zweckmäßig ist die Blasmaschine so ausgestattet, dass die Programmroutine für jeden simulierten Arbeitszyklus innerhalb eines Umlaufs den Winkelbereich der Mediumförderung und/oder den Förderdruck bzw. die Förderrate gegenüber einem normalen Arbeitszyklus variiert, und/oder die Reckspülstange an einer vorbestimmten Kühlstellung in der Form zumindest im Wesentlichen ortsfest stillsetzt. Dies erfordert keine nennenswerten strukturellen Modifikationen der Blasmaschine, sondern lässt sich bequem steuerungsseitig programmieren.

Um einen möglichst großquerschnittigen Abströmweg aus der Form zu öffnen, und damit zumindest während eines simulierten Arbeitszyklus eine hohe Durchsatzrate für das Kühl-medium zu ermöglichen, kann der Form ein steuerungsseitig betätigbares oder druckabhängig ansprechendes Entlastungsventil zugeordnet sein.

Bei einer weiteren Alternative der Blasmaschine kann eine gesonderte, leistungsstarke Fördereinrichtung für ein Kühlmedium wie Umgebungsluft, die gekühlt sein kann, oder Kühlwasser, das gekühlt sein kann, oder/und ein aerosolähnliches Kühlmedium vorgesehen sein, sowie zweckmäßig großquerschnittige und gegebenenfalls nur zum Kühlen angeschlossene Zuführwege zu den Formen, um während des simulierten Arbeitszyklus mit hohem Durchsatz und/oder hohem Druck permanent und effizient gleichzeitig alle Formen über ihre Formhohlraumoberflächen zu kühlen.

Anhand der Zeichnung werden Ausführungsformen des Erfindungsgegenstandes erläutert. Es zeigen:
- Fig. 1:: eine Schemadarstellung einer Blasmaschine mit mehreren Formen,
- Fig. 2:: einen Schnitt durch eine Form in einer Phase eines normalen Arbeitszyklus, und
- Fig. 3:: einen Schnitt durch die Form während eines simulierten Arbeitszyklus zum Zwangskühlen der Form.

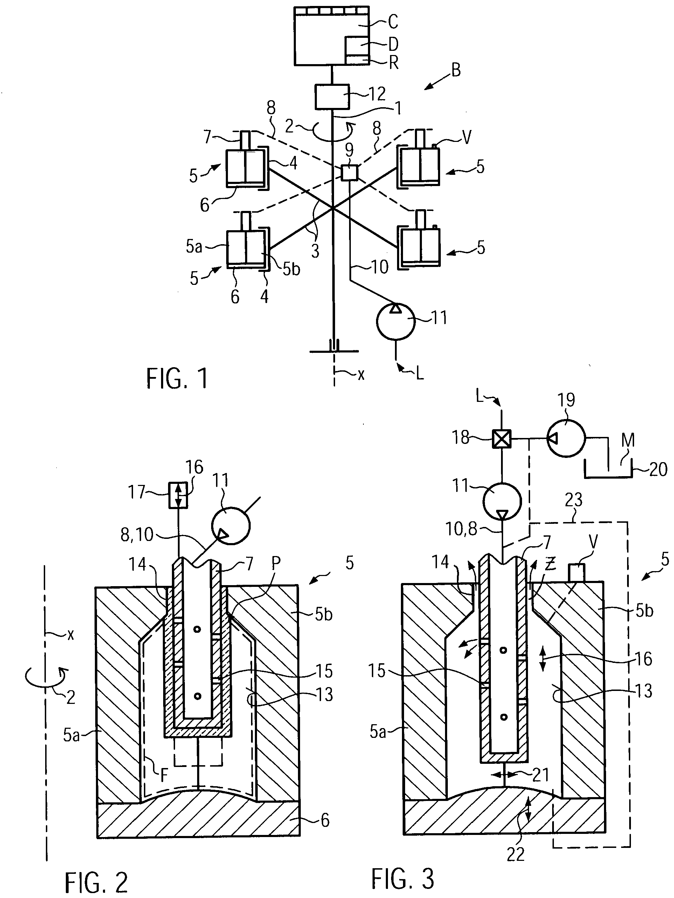

Fig. 1 zeigt in schematischer Darstellung eine Blasmaschine B zum Herstellen von Kunststoff-Behältern wie PET-Flaschen aus Preforms, wobei die Behälter in normalen Arbeitszyklen der Blasmaschine B kontinuierlich produziert werden, und jeder Arbeitszyklus beispielsweise eine Drehung der Blasmaschine B über 360 Grad umfasst. Zweckmäßig handelt es sich bei der Blasmaschine B um eine Heatset-Reckblasmaschine zum Herstellen von PET-Flaschen für heiß abzufüllende Getränke. Dies bedeutet, dass die Formen der Blasmaschine B vor Produktionsaufnahme mittels nicht gezeigter Temperiereinrichtungen und einen durch z. B. die Formen in vom Formhohlraum separierten Kanälen zirkulierend geförderten Wärmeträger auf eine Heatset-Betriebstemperatur von beispielsweise etwa 130°C bis 180°C aufgeheizt, und auf dieser Temperatur gehalten werden. Beim Reckblasen wird jede Preform beim Blasvorgang mechanisch gereckt und flankierend durch Blasluftzufuhr in der Form blasgeformt.

Ist die Produktion in der Blasmaschine B auf ein anderes Produkt (einen anderen Behälter oder eine andere Flasche) umzurüsten, dann müssen nach Produktionsende die Formen nach Abkühlen gewechselt werden, wobei zwar weiterhin der Wärmeträger durch die Temperiereinrichtungen durch die Formen zirkulieren kann, jedoch dann nicht mehr beheizt wird.

Die in Fig. 1 gezeigte Blasmaschine B ist gegenüber herkömmlichen Blasmaschinen dieser Art mit einer zusätzlichen Zwangskühleinrichtung ausgestattet, um die Wartezeit für einen Formenwechsel und den damit verbundenen Produktionsausfall zu minimieren. Diese Zwangskühlvorrichtung wird im Detail auch anhand der Fig. 3 erläutert.

Die Blasmaschine B in Fig. 1 weist eine Maschinenachse 1 auf, die mittels eines Drehantriebs 12 in Richtung eines Pfeils 2 drehantreibbar ist. An der Maschinenachse 1 sind Arme 3 angebracht, die Formhalter 4 und auswechselbare Formen 5 tragen. Die Maschinenachse 1 definiert eine Achse X, um die die Formen 5 bei der Produktion in beispielsweise 360 Grad betragenden normalen Arbeitszyklen rotieren, wobei jeder Form 5 in geöffnetem Zustand eine Preform (P in Fig. 2) zugeführt, dann die Form 5 geschlossen und aus der Preform P ein Behälter, z. B. eine Flasche (F Fig. 2) blasgeformt wird, ehe die Form 5 wieder geöffnet und die Flasche F entformt wird.

Jede Form 5 besteht beispielsweise aus zwei aufklappbaren Formhälften (5a und 5b) und einem beweglichen Bodenteil 6, die miteinander den in Fig. 2 angedeuteten Formhohlraum 13 mit einem Mündungshaltebereich 14 definieren. Falls die Flaschen F durch Reckblasen geformt werden, ist jeder Form 5 eine Reckspülstange 7 zugeordnet, die hohl ist, Durchlässe 15 besitzt, und mittels eines Aktuators 17 in Richtung des Doppelpfeiles 16 im Formhohlraum 13 linear bewegbar ist. Der Aktuator 17 könnte beispielsweise eine nicht gezeigte Kurvensteuerung der Blasmaschine B umfassen.

In Fig. 1 sind ferner Verbindungsleitungen 8 von einem Verteiler 9 zu den Reckspülstangen 7 der Formen 5 angedeutet, die mit den Formen 5 rotieren, und über eine Verbindungsleitung 10 mit einer Fördereinrichtung 11, z. B. einer Druckluftsteuerung oder einem Kompressor, verbunden sind, die zum Blasformen der Preforms P Umgebungsluft L innerhalb eines bestimmten Winkelbereiches einer Umdrehung der Blasmaschine B gezielt zu den Reckspülstangen 7 fördert.

Die Blasmaschine B weist eine computerisierte Maschinensteuerung C mit einer Programmsektion D auf, die eine Programmroutine R für den Betrieb der Zwangskühlvorrichtung zur Vorbereitung einer Umrüstung der Blasmaschine B durch einen Formenwechsel enthält.

Mittels der Programmroutine R wird nach Produktionsabschluss wenigstens ein simulierter Arbeitszyklus gefahren, über den die leeren Formen 5 mit gegenüber der Umlaufgeschwindigkeit bei einem normalen Arbeitszyklus verringerter Umlaufgeschwindigkeit um die Maschinenachse X bewegt werden. Die Formen 5 werden dabei leer belassen, d. h. es werden keine Preforms P mehr eingesetzt. Die Temperiereinrichtungen können weiterhin betrieben werden, jedoch wird der Wärmeträger nicht mehr beheizt. Während des simulierten Arbeitszyklus wird ferner permanent von der Fördereinrichtung 11 Umgebungsluft L über die Reckspülstangen 7 in den Formhohlraum 13 gleichzeitig aller Formen 5 eingeblasen, um von der Formhohlraumoberfläche Wärme aufzunehmen (Fig. 3). Die erwärmte Luft wird durch einen Zwischenraum Z zwischen der Reckspülstange 7 und dem Mündungshaltebereich 14 der Form 5 ausgeblasen.

Die Programmroutine R kann entweder so gestaltet sein, dass dabei die Reckspülstange 7 die auch beim normalen Arbeitszyklus ausgeführte lineare Bewegung in Richtung des Doppelpfeils 16 ausführt, oder dass die Reckspülstange 7 während des simulierten Arbeitszyklus an einer vorbestimmten, optimalen Kühlposition im Formhohlraum 13 im Wesentlichen ortsfest gehalten wird.

Ferner kann die Programmroutine R so ausgelegt sein, dass Umgebungsluft L über volle 360 Grad der Maschinendrehung zugeführt wird. Der Förderdruck oder die Fördermenge können gegenüber einem normalen Arbeitszyklus variiert werden, zweckmäßig gesteigert und/oder graduell zunehmend oder abnehmend.

In dem geschilderten Verfahrensablauf wird z. B. normale Umgebungsluft L zur Zwangskühlung der Formen 5 eingesetzt. Die Umgebungsluft L könnte während des simulierten Arbeitszyklus gekühlt werden, um den Kühleffekt zu intensivieren. Um bei der Zwangskühlung eine möglichst hohe Durchsatzrate zu erzielen, kann zusätzlich jede Form 5 über wenigstens ein Entlastungsventil V verfügen, das entweder über die Programmroutine R geöffnet wird oder druckabhängig anspricht. Die Zwangskühlung kann auch innerhalb des simulierten Arbeitszyklus fortgesetzt werden, während die Formen 5 geöffnet und wieder geschlossen werden. Die Formen 5 könnten alternativ beim simulierten Arbeitszyklus geschlossen bleiben oder nur ganz wenig geöffnet werden.

Fig. 2 verdeutlicht eine Phase eines normalen Arbeitszyklus, bei dem die Form 5 um die Maschinenachse X in Richtung des Pfeils 2 umläuft, und die eingesetzte Preform P im Mündungshaltebereich 14 und an der eingeführten Reckspülstange 7 gehalten ist. In dieser Phase ist die Preform P noch unverformt. Die Form 5 hat bereits die Heatset-Betriebstemperatur von etwa 130° bis 180°C. Im weiteren Verlauf des normalen Arbeitszyklus (nicht gezeigt) wird zunächst die Reckspülstange 7 (gestrichelt angedeutet) abgesenkt, um die Preform P mechanisch zu recken. Gleichzeitig oder nacheilend wird über die Fördereinrichtung 11 und die Zufuhrleitung 8 Blasluft eingeführt, um die Preform P in die Form der Flasche F an der Formhohlraumoberfläche zu bringen und zu halten, bis die Flasche F zum Entformen ausreichend verfestigt ist.

Fig. 3 verdeutlicht den Ablauf bei einem simulierten Arbeitszyklus zum zusätzlichen Zwangskühlen der leeren Form 5. Die Reckspülstange 7 wird in Richtung des Doppelpfeils 16 wie beim normalen Arbeitszyklus verfahren, während permanent von der Fördereinrichtung 11 und über die Zufuhrleitung 8 Umgebungsluft L eingeblasen wird, die die Formhohlraumoberfläche 13 beaufschlagt und durch den Zwischenraum Z aus der Form 5 abströmt. Gegebenenfalls wird die Luft aus dem Formhohlraum 13 auch durch das dann öffnende Entlastungsventil V abgelassen. Ferner kann gegebenenfalls, zumindest zeitweise die Form 5 wie durch die Pfeile (21 und 22) angedeutet, geöffnet werden, wobei dabei die Zwangskühlung nicht unterbrochen wird.

Alternativ ist in Fig. 3 ein Reservoir 20 für ein anderes oder flüssiges Kühlmedium M, z. B. Kühlwasser, angedeutet, das über die Fördereinrichtung 11 während des simulierten Arbeitszyklus in die Form 5 gefördert wird, wobei ein Umschaltventil 18 die Zufuhr von Umgebungsluft L blockieren könnte. Als weitere Alternative könnte eine weitere Fördereinrichtung 19 (ein Kompressor oder eine Pumpe) vorgesehen sein, die das Kühlmedium (z. B. Kühlwasser M) über die Zufuhrleitung 9 während des simulierten Arbeitszyklus gleichzeitig in die Formhohlräume 13 aller Formen 5 fördert. Die Zwangskühlung könnte auch mit einem Gemisch aus Umgebungsluft und Kühlwasser (z. B. als Aerosol) durchgeführt werden.

Als weitere Alternative ist gestrichelt eine getrennte Zuführleitung 23 von der weiteren Fördereinrichtung 19 zu einem Einlass in den Formhohlraum 13 oder zur Reckspülstange 7 angedeutet, über die während des simulierten Arbeitszyklus mit leerer Form 5 das Medium extern zugeführt werden kann, und beispielsweise über das Entlastungsventil V abgeführt wird. Dies könnte bei Heatset-Formen 5 verwendet werden, die ohne Reckspülstangen 7 betrieben werden, kann aber auch bei Verwendung der Reckspülstange 7 benutzt werden.

Im letztgenannten Fall kann gegebenenfalls sowohl über die Zuführleitung 23 als auch die Zuführleitung 8 der Formhohlraum 13 zwangsgekühlt und Wärme von der Formhohlraumoberfläche abgeführt werden, um die Form 5 gegenüber der Heatset-Betriebstemperatur auf eine zum Formwechsel akzeptable Temperatur von etwa 60° bis 40°C zu kühlen, und dabei die Wartezeit bis zum Formenwechsel und die Umrüstung der Blasmaschine B maximal zu verkürzen.

Bei üblichen Heatset-Reckblasmaschinen dauert die Abkühlung der Formen auf etwa 60°C allein unter Nutzen des von den Temperiereinrichtung geförderten, nicht mehr beheizten Wärmeträgers mindestens eine halbe Stunde, und auf etwa 40°C mehr als eine Stunde. Mit der erfindungsgemäßen Zwangskühlung lässt sich diese Zeit halbieren oder noch weiter verkürzen. Dies umfasst es auch, das Kühlmedium L, M in separaten Zuführwegen nur während jedes simulierten Arbeitszyklus gleichzeitig in alle Formhohlräume zu applizieren. Alternativ könnten die Formen 5 nur zur Zwangskühlung über die Formhohlraumoberflächen an nur für diesen Zweck vorgesehene Zufuhrleitungen und wenigstens eine Fördereinrichtung angeschlossen werden, und während der Abkühlzeit die Blasmaschine stillgesetzt werden. Der Wärmeträger kann, muss jedoch nicht, von den Temperiereinrichtungen zirkuliert werden. Gegebenenfalls wird der Wärmeträger sogar flankierend während der Zwangskühlung abgekühlt.

## Patentansprüche

1. Verfahren zum Umrüsten einer mehrere, bei einem Arbeitszyklus umlaufend bewegbare, auf eine Heatset-Betriebstemperatur aufgeheizte Formen (5) aufweisenden Blasmaschine (B) für Kunststoffbehälter (F) aus Preforms (P), insbesondere PET-Flaschen (F), durch einen Formenwechsel, **dadurch gekennzeichnet, dass** vorbereitend zum Formenwechsel in der Blasmaschine (B) wenigstens ein simulierter Arbeitszyklus mit leeren Formen (5) durchgeführt wird, und dass während des zumindest einen simulierten Arbeitszyklus ein Kühlmedium (L, M) zumindest im Wesentlichen gleichzeitig durch alle Formhohlräume (13) der Formen (5) gefördert und die Formen (5) durch das extern zugeführte Kühlmedium (L, M) gegenüber der Heatset-Betriebstemperatur durch Wärmeabfuhr von den Formhohlraumoberflächen abgekühlt werden.

2. Verfahren nach Anspruch 1, **dadurch gekennzeichnet, dass** in der geschlossenen, leer belassenen Form (5) der als Reckblasmaschine ausgebildeten Blasmaschine (B) eine Reckspülstange (7) platziert und das Kühlmedium (L, M) durch die Reckspülstange (7) in den Formhohlraum (13) der Form (5) eingeführt und, vorzugsweise, zumindest durch einen bei leerer Form (5) zwischen der Reckspülstange (7) und der Form (5) gebildeten Zwischenraum (Z) aus der Form (5) abgeführt wird, oder zusätzlich oder alternativ über wenigstens ein Entlastungsventil (V) aus Form (5) oder aus der zumindest teilweise geöffneten Form (5) abgeführt wird.

3. Verfahren nach Anspruch 2, **dadurch gekennzeichnet, dass** die Reckspülstange (7) während des simulierten Arbeitszyklus relativ zu einer beim normalen Arbeitszyklus mit einer Preform (P) in der Form (5) gesteuerten Reckspülstangen-Bewegung im Wesentlichen ortsfest an einer vorbestimmten Kühlposition gehalten wird.

4. Verfahren nach Anspruch 2, **dadurch gekennzeichnet, dass** die Reckspülstange (7) zum Abkühlen der Form während des simulierten Arbeitszyklus wie bei einem normalen Arbeitszyklus in der Form (5) bewegt wird.

5. Verfahren nach wenigstens einem der vorhergehenden Ansprüche, **dadurch gekennzeichnet, dass** der simulierte Arbeitszyklus beim Abkühlen der Formen (5) mit gegenüber einem normalen Arbeitszyklus langsamerer Umlaufgeschwindigkeit der Formen (5) in der Blasmaschine (B) durchgeführt wird, vorzugsweise mit einer Umlaufgeschwindigkeit von maximal etwa 50 Grad/s über 360 Grad durchgeführt wird..

6. Verfahren nach wenigstens einem der vorhergehenden Ansprüche, **dadurch gekennzeichnet, dass** beim Abkühlen der Formen (5) während des simulierten Arbeitszyklus ein Winkelbereich gegenüber einem normalen Arbeitszyklus variiert wird, vorzugsweise vergrößert wird, über den innerhalb des mit einer Umlaufbewegung der Formen (5) um eine Maschinenachse (X) simulierten Arbeitszyklus das Kühlmedium (M, L) gleichzeitig in die Formen (5) gefördert wird.

7. Verfahren nach wenigstens einem der vorhergehenden Ansprüche, **dadurch gekennzeichnet,** das beim Abkühlen während des simulierten Arbeitszyklus der Förderdruck des Kühlmediums (M, L) gegenüber einem normalen Arbeitszyklus variiert, vorzugsweise angehoben, wird, vorzugsweise auf einen Druckbereich zwischen etwa 40 bar und 10 bar.

8. Verfahren nach Anspruch 1, **dadurch gekennzeichnet, dass** das während des simulierten Arbeitszyklus in die Form (5) geförderte Kühlmedium (M, L) das auch beim normalen Arbeitszyklus zum Blasformen einer Preform (P) und/oder zum Spülen verwendete Medium , oder ein davon verschiedenes Medium ist oder eine niedrigere Temperatur aufweist als das beim normalen Arbeitszyklus geförderte Medium.

9. Verfahren nach wenigstens einem der vorhergehenden Ansprüche, **dadurch gekennzeichnet, dass** das Kühlmedium (L, M) ein Gas wie Umgebungsluft, vorzugsweise gekühlte Umgebungsluft, oder eine Flüssigkeit wie Kühlwasser, vorzugsweise gekühltes Kühlwasser, oder ein Gas/Flüssigkeits-Gemisch, z. B. in Aerosolform, ist.

10. Blasmaschine (B), insbesondere Reckblasmaschine, zum Blasformen von Kunststoffbehältern aus Preforms (P), insbesondere PET-Flaschen (F) zur Heißabfüllung, in während eines normalen Arbeitszyklus umlaufend bewegten, auswechselbar gehalterten Heatset-Formen (5), mit einer programmierbaren Maschinensteuerung (C) und einer Fördereinrichtung (11, 19) zum Fördern eines Mediums (M, L) in einen Formhohlraum (13) jeder Form (5), **dadurch gekennzeichnet, dass** die Maschinensteuerung (C) eine Programmsektion (D) mit einer Programmroutine (R) zum Ausführen wenigstens eines simulierten Arbeitszyklus mit leeren Formen (5) und verringerter Umlaufgeschwindigkeit zur Zwangskühlung der Formhohlraumoberflächen mit externer Zufuhr eines Kühlmediums (M, L) in die Formhohlräume (13) der Formen (5) aufweist.

11. Blasmaschine nach Anspruch 10, **dadurch gekennzeichnet, dass** die Fördereinrichtung (11, 19) mit einer in die Form (5) einbringbaren Reckspülstange (7) verbunden oder verbindbar ist.

12. Blasmaschine nach Anspruch 10, **dadurch gekennzeichnet, dass** wenigstens eine zusätzliche, mit den Formen (5) bzw. den Reckspülstangen (7) zumindest während des simulierten Arbeitszyklus verbindbare Fördereinrichtung (19) für ein gasförmiges oder flüssiges Kühl-Medium (M, L) oder separate Zuführwege nur für die Zwangskühlung vorgesehen sind.

13. Blasmaschine nach Anspruch 10, **dadurch gekennzeichnet, dass** über die Programmroutine (R) für einen simulierten Arbeitszyklus innerhalb eines Umlaufs der Formen (5) ein Winkelbereich der Mediumförderung und/oder der Förderdruck variierbar ist/sind, oder dass die Reckspülstange (7) an einer vorbestimmten Kühlstellung im Formhohlraum (13) im Wesentlichen stillsetzbar ist.

14. Blasmaschine nach wenigstens einem der Ansprüche 10 bis 13, **dadurch gekennzeichnet, dass** jeder Form (5) ein während eines simulierten Arbeitszyklus zur Zwangskühlung betätigbares oder druckabhängig ansprechendes Entlastungsventil (V) zugeordnet ist.

## Claims

1. A method for converting a blow molding machine (B) for plastic containers (F) of preforms (P), particularly PET bottles (F), due to a mold change, the blow molding machine (B) comprising a plurality of molds (5) which are rotatingly movable during a work cycle and heated to a heat-set operating temperature, **characterized in that** at least one simulated work cycle with empty molds (5) is carried out for preparing the mold change in the blow molding machine (B), and that during the at least one simulated work cycle a cooling medium (L, M) is conveyed at least substantially at the same time through mold cavities (13) of the molds (5) and the molds (5) are cooled by heat discharge from the mold cavity surfaces (13) relative to the heat-set operating temperature by the externally supplied cooling medium (L, M).

2. The method according to claim 1, **characterized in that** in the closed mold (5) which is left empty and pertains to the blow molding machine (B) formed as a stretch blow molding machine, a stretching rod (7) is placed and the cooling medium (L, M) is introduced through the stretching rod (7) into the mold cavity (13) of the mold (5), preferably, at least through a space (Z) formed in the empty mold (5) between the stretching rod (7) and the mold (5) and is discharged additionally or alternatively via at least one relief valve (V) out of the mold or out of the at least partly opened mold (5).

3. The method according to claim 2, **characterized in that** the stretching rod (7) is held substantially stationary at a predetermined cooling position during the simulated work cycle relative to a stretching rod movement controlled in the normal operating cycle with a preform (P) in the mold (5).

4. The method according to claim 2, **characterized in that** the stretching rod (7) is moved in the mold (5) for cooling the mold during the simulated work cycle as in a normal work cycle.

5. The method according to at least one of the preceding claims, **characterized in that** the simulated work cycle during cooling of the molds (5) is carried out at an orbiting speed of the molds (5) in the blow molding machine (B) that is slower in comparison with a normal work cycle, preferably at not more than about 50 degrees/s over 360 degrees.

6. The method according to at least one of the preceding claims, **characterized in that** while cooling of the molds (5) during the simulated work cycle an angular range is varied in comparison with a normal work cycle, preferably is enlarged, over which angular range the cooling medium (M, L) is conveyed at the same time all molds (5) during the simulated work cycle with an orbiting movement of the molds (5) about the machine axis (X).

7. The method according to at least one of the preceding claims, **characterized in that** during cooling in the simulated work cycle the conveying pressure of the cooling medium (M, L) is varied in comparison with a normal work cycle, is preferably raised, preferably to a pressure range between about 40 bar and 10 bar.

8. The method according to claim 1, **characterized in that** the cooling medium (M, L) conveyed into the mold (5) during the simulated work cycle either is the medium also used during the normal work cycle for blow molding a preform (P) and/or for purging, or is a medium differing therefrom, or has a lower temperature than the medium conveyed during the normal work cycle.

9. The method according to at least one of the preceding claims, **characterized in that** the cooling medium (L, M) is a gas, such as ambient air, preferably cooled ambient air, or a liquid, such as cooling water, preferably cooled cooling water, or a gas/liquid mixture, e.g. in aerosol form.

10. A blow-molding machine (B), particularly stretch blow-molding machine, for blow molding plastic containers from preforms (P), particularly PET bottles (F) for hot filling, in exchangeably hold heat-set molds (5) that are orbitingly moved during a normal work cycle, comprising a programmable machine control (C) and a conveying device (11, 19) for conveying a medium (M, L) into a mold cavity (13) of each mold (5), **characterized in that** the machine control (C) comprises a program section (D) with a program routine (R) for executing at least one simulated work cycle with empty molds (5) and at a reduced orbiting speed for a forced cooling of the mold cavity surfaces with external supply of a cooling medium (M, L) into the mold cavities (13) of the molds (5).

11. The blow-molding machine according to claim 10, **characterized in that** the conveying device (11, 19) is connected or connectable to a stretching rod (7) which can be introduced into the mold (5).

12. The blow-molding machine according to claim 10, **characterized in that** at least one additional conveying device (19) which is connectable to the molds (5) or the stretching rods (7), respectively, at least during the simulated work cycle for conveying a gaseous or liquid cooling medium (M, L) is provided or that separate supply paths are provided for the forced cooling only.

13. The blow molding machine according to claim 10, **characterized in that** by the program routine (R) for a simulated work cycle within one orbiting rotation of the molds (5) the angular range of medium feed and/or medium conveying pressure is/are variable, or that the stretching rod (7) can be substantially stopped at a predetermined cooling position in the mold cavity (13).

14. The blow molding machine according to at least one of claims 10 to 13, **characterized in that** each mold (5) has assigned thereto a relief valve (V) which either is operable or is responsive to pressure for the forced cooling during a simulated work cycle.

## Revendications

1. Procédé de reconversion d'une machine de moulage par soufflage (B), qui comprend plusieurs moules (5) échauffés à une température de fonctionnement stabilisée et déplaçables en révolution lors d'un cycle de travail, et qui est destinée à la fabrication de contenants (F) en matière plastique à partir de préformes (P), notamment des bouteilles en PET (F), par échange de moules, **caractérisé en ce que** pour préparer le changement de moules, on effectue dans la machine de moulage par soufflage (B) au moins un cycle de travail simulé avec des moules (5) vides, et **en ce que** pendant ledit au moins un cycle de travail simulé, on fait circuler un fluide de refroidissement (L, M) au moins sensiblement de manière simultanée à travers toutes les cavités de moule (13) des moules (5), et les moules (5) sont ainsi refroidis par rapport à la température de fonctionnement stabilisée, par le fluide de refroidissement (L, M) amené par voie externe, grâce à une évacuation de chaleur à partir des surfaces des cavités de moules.

2. Procédé selon la revendication 1, **caractérisé en ce que** dans le moule (5) fermé, laissé vide, de la machine de moulage par soufflage (B) réalisée sous forme de machine de moulage par soufflage à étirage, on place une tige d'étirage et de rinçage (7), et le fluide de refroidissement (L, M) est introduit par la tige d'étirage et de rinçage (7) dans la cavité de moule (13) du moule (5), et est évacué du moule (5), de préférence au moins par l'intermédiaire d'un espace intermédiaire (Z) formé, dans le cas du moule (5) vide, entre la tige d'étirage et de rinçage (7) et le moule (5), ou est, en supplément ou en variante, évacué par l'intermédiaire d'au moins une soupape de décharge (V), du moule (5) ou du moule (5) au moins partiellement ouvert.

3. Procédé selon la revendication 2, **caractérisé en ce que** pendant le cycle de travail simulé, la tige d'étirage et de rinçage (7) est, par rapport à un mouvement de tige d'étirage et de rinçage commandé lors d'un cycle de travail normal avec une préforme (P) dans le moule (5), maintenue sensiblement en position fixe, dans une position de refroidissement prédéterminée.

4. Procédé selon la revendication 2, **caractérisé en ce que** pour refroidir le moule, la tige d'étirage et de rinçage (7) est déplacée dans le moule (5) lors du cycle de travail simulé, comme lors d'un cycle de travail normal.

5. Procédé selon l'une au moins des revendications précédentes, **caractérisé en ce que** lors du refroidissement des moules (5), le cycle de travail simulé est effectué dans la machine de moulage par soufflage (B) avec une vitesse de révolution des moules (5) plus lente que dans le cas du cycle de travail normal, de préférence avec une vitesse de révolution d'au maximum 50 degrés/s sur 360 degrés.

6. Procédé selon l'une au moins des revendications précédentes, **caractérisé en ce que** lors du refroidissement des moules (5) pendant le cycle de travail simulé, on fait varier, de préférence on agrandit par rapport à un cycle de travail normal, une zone angulaire sur laquelle, pendant le cycle de travail simulé par un mouvement de révolution des moules (5) autour d'un axe de machine (X), le fluide de refroidissement (M, L) est simultanément acheminé dans les moules (5).

7. Procédé selon l'une au moins des revendications précédentes, **caractérisé en ce que** lors du refroidissement pendant le cycle de travail simulé, on fait varier la pression d'acheminement du fluide de refroidissement (M, L) par rapport à un cycle de travail normal, à savoir que de préférence on l'augmente, de préférence à un niveau de pression entre environ 40 bar et 10 bar.

8. Procédé selon la revendication 1, **caractérisé en ce que** le fluide de refroidissement (M, L) acheminé pendant le cycle de travail simulé dans le moule (5), est le fluide également utilisé lors du cycle de travail normal, pour le formage ou moulage par soufflage de la préforme (P) et/ou pour le rinçage, ou est un fluide différent, ou bien présente une température plus basse que le fluide acheminé au cours du cycle de travail normal.

9. Procédé selon l'une au moins des revendications précédentes, **caractérisé en ce que** le fluide de refroidissement (M, L) est un gaz tel que de l'air environnant, de préférence de l'air environnant refroidi, ou bien un liquide comme de l'eau de refroidissement, de préférence de l'eau de refroidissement refroidie, ou bien encore un mélange gaz/liquide, par exemple sous forme d'aérosol.

10. Machine de moulage par soufflage (B), notamment machine de moulage par soufflage et étirage, pour assurer le moulage par soufflage de contenants en matière plastique à partir de préformes (P), notamment des bouteilles en PET (F) destinées au remplissage à chaud, dans des moules (5) stabilisés en température, qui sont maintenus de manière interchangeable et sont déplacés en révolution pendant un cycle de travail normal, l'ensemble comprenant une commande de machine (C) programmable et un dispositif d'acheminement (11, 19) destiné à acheminer un fluide (M, L) dans une cavité de moule (13) de chaque moule (5), **caractérisée en ce que** la commande de machine (C) présente une section de programme (D) avec une routine de programme (R) pour exécuter au moins un cycle de travail simulé avec des moules (5) vides et une vitesse de révolution réduite, en vue de réaliser un refroidissement forcé des surfaces de cavités de moules par l'amenée externe d'un fluide de refroidissement (M, L) dans les cavités de moules (13) des moules (5).

11. Machine de moulage par soufflage selon la revendication 10, **caractérisée en ce que** le dispositif d'acheminement (11, 19) est relié ou peut être relié à une tige d'étirage et de rinçage (7) pouvant être introduite dans le moule (5).

12. Machine de moulage par soufflage selon la revendication 10, **caractérisée en ce que** sont prévus au moins un dispositif d'acheminement supplémentaire (19) pour un fluide de refroidissement (M, L) sous forme gazeuse ou liquide, qui peut être relié aux moules (5) ou aux tiges d'étirage et de rinçage (7) au moins pendant le cycle de travail simulé, ou bien des chemins d'acheminement séparés uniquement pour le refroidissement forcé.

13. Machine de moulage par soufflage selon la revendication 10, **caractérisée en ce que** via la routine de programme (R) pour un cycle de travail simulé, il est possible pendant une révolution des moules (5), de faire varier une zone angulaire de l'acheminement de fluide et/ou la pression d'acheminement, ou bien **en ce que** la tige d'étirage et de rinçage (7) peut être sensiblement immobilisée dans la cavité de moule (13), dans une position de refroidissement prédéterminée.

14. Machine de moulage par soufflage selon l'une au moins des revendications 10 à 13, **caractérisée en ce qu'**à chaque moule (5) est associée une soupape de décharge (V) pouvant être actionnée ou déclenchant en fonction de la pression pendant un cycle de travail simulé pour le refroidissement forcé.
